# EUROPÄISCHE PATENTSCHRIFT

(11) **EP 2 384 355 B1**
(45) Veröffentlichungstag und Bekanntmachung des Hinweises auf die Patenterteilung: **20.02.2013**
(21) Anmeldenummer: 09793519.1
(22) Anmeldetag: 16.12.2009
(51) Int. Cl.: C08L 25/06

(54) **ELASTISCHER PARTIKELSCHAUMSTOFF AUF BASIS VON POLYOLEFIN/STYROLPOLYMER-MISCHUNGEN**
ELASTIC PARTICLE FOAM BASED ON POLYOLEFIN/STYRENE POLYMER MIXTURES
MOUSSE PARTICULAIRE ÉLASTIQUE À BASE DE MÉLANGES POLYOLÉFINE/POLYMÈRE DE STYRÈNE

(30) Priorität: 30.12.2008 EP 08173084
(43) Veröffentlichungstag der Anmeldung: 09.11.2011
(73) Patentinhaber: BASF SE, 67056 Ludwigshafen (DE)
(72) Erfinder: SCHIPS, Carsten, 67342 Speyer (DE); HAHN, Klaus, 67281 Kirchheim (DE); KNOLL, Konrad, 68199 Mannheim (DE); RUCKDÄSCHEL, Holger, 67487 St Martin (DE); ASSMANN, Jens, 68165 Mannheim (DE); GRÄSSEL, Georg, 67063 Ludwigshafen (DE); HOFMANN, Maximilian, 68167 Mannheim (DE)
(86) Internationale Anmeldenummer: PCT/EP2009/067260
(87) Internationale Veröffentlichungsnummer: WO 2010/076213

(56) Entgegenhaltungen:
- EP-A2- 0 682 079
- WO-A1-2008/125250
- WO-A1-2009/112549

## Beschreibung

Die Erfindung betrifft expandierbare, thermoplastische Polymerpartikel, enthaltend
A) 45 bis 97,8 Gewichtsprozent eines Styrolpolymeren,
B1) 1 bis 45 Gewichtsprozent eines Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 25 Gewichtsprozent eines Block- oder Propfcopolymer mit einem gewichtsmittleren Molekulargewicht Mw von mindestens 100.000 g/mol, enthaltend
   a) mindestens einen Block S aus 95 bis 100 Gew.-% vinylaromatischen Monomeren und 0 bis 5 Gew.-% Dienen und
   b) mindestens einen Copolymerblock (S/B)_{A} aus 63 bis 80 Gew.-% vinylaromatischen Monomeren und 20 bis 37 Gew.-% Dienen mit einer Glasübergangstemperatur TgA im Bereich von 5 bis 30°C, wobei
   der Gewichtsanteil der Summe aller Blöcke S im Bereich von 50 bis 70 Gew.-%, bezogen auf das Block- oder Pfropfcopolymer A, liegt, -
C2) 0 bis 20 Gewichtsprozent eines von C1 verschiedenen Styrol-Butadien- oder Styrol-Isopren-Blockcopolymeren,
C3) 0,1 bis 9,9 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels,
wobei die Summe aus A) bis E) 100 Gew.-% ergibt.

Expandierbare Polymermischungen aus Styrolpolymeren, Polyolefinen und gegebenenfalls Lösungsvermittlern, wie hydrierte Styrol-Butadien-Blockcopolymeren, sind beispielsweise aus DE 24 13 375, DE 24 13 408 oder DE 38 14 783 bekannt. Die daraus erhältlichen Schaumstoffe sollen gegenüber Schaumstoffen aus Styrolpolymeren bessere mechanischen Eigenschaften, insbesondere eine bessere Elastizität und eine geringere Sprödigkeit bei tiefen Temperaturen, sowie eine Unempfindlichkeit gegenüber Lösungsmitteln, wie Essigester und Toluol, aufweisen. Das Treibmittelhaltevermögen und die Verschäumbarkeit der expandierbaren Polymermischungen zu niedrigen Dichten sind für die Verarbeitung jedoch nicht ausreichend.

Die WO 2005/056652 beschreibt Partikelschaumstoffformteile mit einer Dichte im Bereich von 10 bis 100 g/l, die durch Verschweißen von vorgeschäumten Schaumpartikeln aus expandierbaren, thermoplastischen Polymergranulaten erhältlich sind. Die Polymer Granulate enthalten Mischungen aus Styrolpolymeren und anderen thermoplastischen Polymeren und können durch Schmelzeimprägnierung und anschließender Druckunterwassergranulierung erhalten werden.

Des Weiteren sind elastische Partikelschaumstoffe aus expandierbaren Interpolymerpartikeln bekannt (z. B. US 2004/0152795 A1). Die Interpolymeren sind durch Polymerisation von Styrol in Gegenwart von Polyolefinen in wässriger Suspension erhältlich und bilden ein Interpenetrierendes Netzwerk aus Styrolpolymeren und Olefinpolymeren. Aus den expandierbaren Polymerpartikeln diffundiert das Treibmittel jedoch schnell heraus, so dass sie bei tiefen Temperaturen gelagert werden müssen und nur eine kurze Zeit eine ausreichende Verschäumbarkeit aufweisen.

Die WO 2005/092959 beschreibt nanoporöse Polymerschaumstoffe, die aus treibmittelhaltigen, mehrphasigen Polymermischungen mit Domänen im Bereich von 5 bis 200 nm erhältlich sind. Bevorzugt bestehen die Domänen aus einem durch Emulsionspolymerisation erhältlichen Kern-Schale-Teilchen, in denen die Löslichkeit des Treibmittels mindestens doppelt so hoch ist, als in den angrenzenden Phasen.

Aufgabe der vorliegenden Erfindung war es, expandierbare, thermoplastische Polymerpartikel mit geringem Treibmittelverlust und hohem Expansionsvermögen bereitzustellen, die zu Partikelschaumstoffen mit hoher Steifigkeit und gleichzeitig guter Elastizität verarbeitbar sind, sowie ein Verfahren zu deren Herstellung.

Demgemäß wurden die oben beschriebenen, expandierbaren thermoplastischen Polymerpartikel gefunden.

Bevorzugt enthalten die expandierbaren, thermoplastischen Polymerpartikel
A) 55 bis 89,7 Gewichtsprozent eines Styrolpolymeren,
B1) 4 bis 25 Gewichtsprozent eines Polyolefins mit einem Schmelzpunkt im Bereich von 105 bis 140°C,
B2) 1 bis 15 Gewichtsprozent eines Polyolefins mit einem Schmelzpunkt unter 105°C,
C1) 3 bis 25 Gewichtsprozent
C2) 3 bis 20 Gewichtsprozent
C3) 1 bis 5 Gewichtsprozent eines Styrol-Ethylen-butylen-Blockcopolymeren,
D) 3 bis 10 Gewichtsprozent eines Treibmittels,
E) 0.3 bis 3 Gewichtsprozent eines Nukleierungsmittels,
wobei die Summe aus A) bis E) 100 Gew.-% ergibt.

Die expandierbaren thermoplastischen Polymerpartikel enthalten 45 bis 97,8 Gew.-%, besonders bevorzugt 55 bis 89,7 Gew.-% eines Styrolpolymeren A), wie Standard (GPPS)- oder Schlagzähpolystyrol (HIPS) oder Styrol-Acrylnitril-Copolymere (SAN) oder Acrylnitril-Butadien-Styrol-Copolymere (ABS). Besonders bevorzugt werden Standard-Polystyroltypen mit gewichtsmittleren Molekulargewichten im Bereich von 120.000 bis 300.000 g/mol und einer Schmelzevolumenrate MVR (200°C/5 kg) nach ISO 1133 im Bereich von 1 bis 10 cm³/10 min, beispielsweise PS 158 K, 168 N oder 148 G der BASF Aktiengesellschaft. Zur Verbesserung der Verschweißung der Schaumstoffpartikel bei der Verarbeitung zum Formteil können leichtfließende Typen, beispielsweise Empera® 156L (Innovene) zugesetzt werden

Als weitere Komponenten B) enthalten die expandierbaren thermoplastischen Polymerpartikel Polyolefine B1) mit einem Schmelzpunkt im Bereich von 105 bis 140°C und Polyolefine B2) mit einem Schmelzpunkt unter 105°C. Der Schmelzpunkt ist der mittels DSC (Dynamic Scanning Calorimetrie) bei einer Aufheizrate von 10°C/Minute ermittelte Schmelzpeak.

Die expandierbaren, thermoplastischen Polymerpartikel enthalten 1 bis 45 Gewichtsprozent, insbesondere 4 bis 35 Gew.-% eines Polyolefins B1). Als Polyolefin B1) wird bevorzugt ein Homo- oder Copolymer von Ethylen und/oder Propylen mit einer Dichte im Bereich von 0,91 bis 0,98 g/L (bestimmt nach ASTM D792), insbesondere Polyethylen. Als Polypropylene kommen insbesondere Spritzgusstypen in Betracht. Als Polyethylene kommen kommerziell erhältliche Homopolymere aus Ethylen, wie PE-LD (Spritzgusstypen), -LLD, -HD, oder Copolymere aus Ethylen und Propylen (z. B Molen® RP220 und Moplen® RP320 der Basell), Ethylen und Vinylacetat (EVA), Ethylenacrylate (EA) oder Ethylen-Butylen-Acrylate (EBA) in Frage. Der Schmelzevolumenindex MVI (190°C/2,16 kg) der Polyethylene liegt üblicherweise im Bereich von 0,5 bis 40 g/10 min, die Dichte im Bereich von 0,91 bis 0,95 g/cm³. Außerdem können Abmischungen mit Polyisobuten (PIB)(z. B. Oppanol® B150 der BASF SE) eingesetzt werden. Besonders bevorzugt wird LLDPE mit einem Schmelzpunkt im Bereich von 110 bis 125°C und einer Dichte im Bereich von 0,92 bis 0,94 g/L eingesetzt.

Mit geringerem Anteil an Polyolefin B1) nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 4 bis 20 Gew.-% Polyolefin erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Entformungsrest εᵣₑₛₜ im Bereich von 25 bis 35 %.

Als Polyolefin B2) enthalten die expandierbaren, thermoplastischen Polymerpartikel enthalten 0 bis 25 Gewichtsprozent, insbesondere 1 bis 15 Gew.-% eines Polyolefins B2). Das Polyolefin B2) weist vorzugsweise eine Dichte im Bereich von 0,86 bis 0,90 g/L (bestimmt nach ASTM D792) auf. Hierfür eignen sich insbesondere thermoplastische Elastomere auf Basis von Olefinen (TPO). Besonders bevorzugt werden Ethylen-Octen-Copolymere, die beispielsweise im Handel unter der Bezeichnung Engage® 8411 von der Firma Dow erhältlich sind. Expandierbare, thermoplastische Polymerpartikel, die die Komponente B2) enthalten, zeigen nach der Verarbeitung zu Schaumstoffformteilen eine deutliche Verbesserung in der Biegearbeit und Reißfestigkeit.

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Zur gezielten Einstellung der gewünschten Morphologie werden Verträglichkeitsvermittler (Komponenten C) eingesetzt. Eine Verbesserung der Verträglichkeit wird erfindungsgemäß durch die Verwendung einer Mischung von Styrol-Butadien- oder Styrol-Isopren-Blockcopolymeren als Komponente C1) und Styrol-Ethylen-Butylen-Blockcopolymeren (SEBS) als Komponente C2) erreicht.

Die Verträglichkeitsvermittler führen zu einer verbesserten Haftung zwischen der Polyolefin-reichen und der Styrolpolymerreichen Phase und verbessern die Elastizität des Schaumstoffs schon in geringen Mengen deutlich gegenüber herkömmlichen EPS-Schaumstoffen. Untersuchungen zur Domänengröße der Polyolefin-reichen Phase zeigten, dass der Verträglichkeitsvermittler durch Reduktion der Grenzflächenspannung kleine Tröpfchen stabilisiert.

### Komponente C1:

Die erfindungsgemäßen expandierbaren, thermoplastischen Polymerpartikel enthalten als Komponente C1 eine Block- oder Pfropfcopolymer , welches
a) mindestens einen Block S aus 95 bis 100 Gew.-% vinylaromatischen Monomeren und 0 bis 5 Gew.-% Dienen und
b) mindestens einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C,
enthält.

Als vinylaromatische Monomere kommen beispielsweise Styrol, alpha-Methylstyrol, kernalkylierte Styrole wie p-Methylstyrol oder Tertiärbutylstyrol, oder 1,1-Diphenylethylen oder Mischungen davon in Betracht. Bevorzugt wird Styrol eingesetzt.

Bevorzugte Diene sind Butadien, Isopren, 2,3-Dimethylbutadien, 1,3-Pentadien, 1,3-Hexadien oder Piperylen oder deren Mischungen. Besonders bevorzugt sind Butadien und Isopren.

Die gewichtsmittlere Molmasse M_{w} des Block- oder Pfropfcopolymeren liegt bevorzugt im Bereich von 250.000 bis 350.000 g/mol.

Bevorzugt bestehen die Blöcke S aus Styroleinheiten. Bei den durch anionische Polymerisation hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird das gewichtsmittlere Molekulargewicht M_{w} über die Polymerisationstemperatur und/oder den Zusatz von Reglern eingestellt.

Die Glasübergangstemperatur des Copolymerblocks (S/B)_{A} liegt bevorzugt im Bereich von 5 bis 20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Bevorzugt besteht der Copolymerblock (S/B)_{A} aus 65 bis 75 Gew.-% Styrol und 25 bis 35 Gew.-% Butadien.

Bevorzugt werden Block- oder Pfropfcopolymere, welche ein oder mehrere Copolymerblöcke (S/B)_{A} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Besonders bevorzugt sind cyclohexanlösliche Alkoholate wie Kaliumtertiärbutylamylat, die in einem Lithium-Kalium-Verhältnis von bevorzugt 30:1 bis 40:1 eingesetzt werden. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Die gewichtsmittlere Molmasse M_{w} des Copolymerblocks (S/B)_{A} liegt in der Regel im Bereich von 30.000 bis 200.000 g/mol, bevorzugt im Bereich von 50.000 bis 100.000 g/mol.

Statistische Copolymere (S/B)_{A} können aber auch durch radikalische Polymerisation hergestellt werden.

Die Blöcke (S/B)_{A} bilden in der Formmasse bei Zimmertemperatur (23°C) eine halbharte Phase aus, welche für die hohe Duktilität und Reißdehnungen, d.h. hohe Dehnung bei geringer Dehngeschwindigkeit, verantwortlich sind.

Die Pfropfpolymeren können in zwei Typen eingeteilt werden: Typ 1) besteht aus einem Rückgrat aus einem statistischen S/B-Polymer und Polystyrol-Pfropfästen, während Typ 2) ein Polystyrol-Rückgrat mit S/B-Seitengruppen aufweist. Bevorzugt ist Typ 1) -

Zur Herstellung derartiger Pfropfpolymerer gibt es eine Reihe von Synthesestrategien:
(i) Pfropfast als Makromonomer, das z.B. radikalisch mit weiteren Monomeren copolymerisiert wird.
   Synthesewege: Verwendung eines Starters oder Reglers mit einer OH- oder NH₂-Gruppe. Starter z.B. Wasserstoffperoxid; Regler z.B. Thioethanolamin oder HS-CH₂--(CH₂)ₙ-OH. Über die Reglermenge und Temperatur kann die Molmasse eingestellt werden. So kann endgruppenfunktionalisiertes Polystyrol bzw. S/B erhalten werden. Durch Umsetzung mit Acryloylchlorid oder Methacryloylchlorid wird unter Ausbildung einer Ester- oder Amidgruppe eine copolymerisierbare Acryl- bzw. Methacrylgruppe eingeführt. Das Makromonomer wird dann in Styrol bzw. einem Gemisch aus Styrol und Butadien gelöst und entweder thermisch oder mit einem Radikalstarter und ggf. Regler polymerisiert.
(ii) Pfropfast mit funktioneller Endgruppe und Rückgrat mit reaktiver Gruppe oder Gruppen.
   Synthesewege: Das Rückgrat kann mit kleinen Mengen an reaktivem Monomeren copolymerisiert werden, z.B. Maleinsäureanhydrid. Der Pfropfast wird wie bei a) z.B. mit einem Thioethanolamin geregelt und anschließend mit dem Rückgrat unter Bildung eines Amids umgesetzt, das bei thermischer Belastung in ein sehr stabiles Imid übergeht.
(iii) Direkte radikalische Pfropfung auf Rückgrat durch Erzeugen eines Radikals auf dem Rückgrat
   Synthesewege:
   1) S/B-Rückgrat: Pfropfen von Polystyrol auf S/B-Rückgrat entweder thermisch oder mit Radikalstarter bevorzugt unter kontrolliert radikalischen Bedingungen, etwa unter TEMPO-Zusatz
   2) Einführung von funktionellen Gruppen am Rückgrat durch Copolymerisation mit funktionellen Monomeren (Hydroxyethylmethacrylat etc.) gefolgt von Einführung von Radikalstarter an Rückgrat.
(iv) Pfropfung von Carbanion auf Rückgrat
   Synthesewege: Herstellung eines Rückgrats mit wenigen Monomereinheiten, die gegenüber Carbanionen reaktiv sind, z.B. Carbonylverbindungen wie Ester, Anhydride, Nitrile, Epoxide etc. Monomere in diesem Sinn sind z.B. Acrylate, Methacrylate, Acrylnitril etc.). Das Hauptmonomer kann z.B. Styrol sein. Weiter kommen Monomere mit Abgangsgruppen in Betracht wie Chlormethylgruppen. Aber auch das ganze Rückgrat kann ein Acrylatcopolymer sein, etwa MMA/n-Butylacrylat, wobei das Monomerverhältnis so gewählt wird, dass das Polymer ein Tg von ca. 20°C hat, d.h. ca. 40/60 w/w. Der Ast wird separat durch lebende anionische Polymerisation hergestellt und zum radikalisch hergestellten Rückgrat hinzugegeben. Bevorzugt ist Styrol und dessen Derivate. Man erhält dann ein MMA/nBA-g-Styrol-Pfropfcopolymer.
   Die Block- oder Pfropfcopolymeren C1 können zusätzlich
(v) mindestens einen Homopolydien (B)- oder Copolymerblock (S/B)_{B} aus 1 bis 60 Gew.-%, vorzugsweise 20 bis 60 Gew.-% vinylaromatischen Monomeren und 40 bis 99 Gew.-%, bevorzugt 40 bis 80 Gew.-% Dienen mit einer Glasübergangstemperatur Tg_{B} im Bereich von 0 bis -110°C, enthalten.

Die Glasübergangstemperatur des Copolymerblocks (S/B)_{B} liegt bevorzugt im Bereich von -60 bis -20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Bevorzugt besteht der Copolymerblock (S/B)_{B} aus 30 bis 50 Gew.-% Styrol und 50 bis 70 Gew.-% Butadien.

Bevorzugt werden Block- oder Pfropfcopolymere , welche ein oder mehrere Copolymerblöcke (S/B)_{B} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Statistische Copolymere (S/B)_{B} können aber auch durch radikalische Polymerisation hergestellt werden.

Die eine Weichphase bildenden Blöcke B und/oder (S/B)_{B} können über ihre gesamte Länge einheitlich oder in unterschiedlich zusammengesetzte Abschnitte aufgeteilt sein. Bevorzugt sind Abschnitte mit Dien (B) und (S/B)_{B}, die in unterschiedlichen Abfolgen kombiniert werden können. Möglich sind Gradienten mit sind kontinuierlich änderndem Monomerverhältnis, wobei der Gradient mit reinem Dien oder einem hohen Dienanteil beginnen kann und der Styrolanteil bis 60% ansteigen kann. Auch die Abfolge von zwei oder mehreren Gradientenabschnitten ist möglich. Gradienten können durch Unter - oder Überdosierung des Randomizers erzeugt werden. Bevorzugt ist die Einstellung eines Lithium-Kalium-Verhältnisses von größer als 40:1 oder bei Verwendung von Tetrahydrofuran (THF) als Randomizer eine THF-Menge von weniger als 0,25 Vol-% bezogen auf das Polymerisationslösungsmittel. eine Alternative ist die bezogen auf die Polymerisationsgeschwindigkeit langsame, gleichzeitige Dosierung von Dien und Vinylaromat, wobei das Monomerverhältnis entsprechend dem angestrebten Zusammensetzungsprofil entlang des Weichblocks gesteuert wird.

Die gewichtsmittlere Molmasse M_{w} des Copolymerblocks (S/B)_{B} liegt in der Regel im Bereich von 50.000 bis 100.000 g/mol, bevorzugt im Bereich von 10.000 bis 70.000 g/mol.

Der Gewichtsanteil der Summe aller Blöcke S liegt im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Block- oder Pfropfcopolymer.

Bevorzugt sind Blöcke (S/B)_{A} und (S/B)_{B} durch einen Block S voneinander getrennt.

Das Gewichtsverhältnis der Copolymerblöcke (S/B)_{A} zu den Copolymerblöcken (S/B)_{B} liegt bevorzugt im Bereich von 80 : 20 bis 50 : 50.

Bevorzugt werden Blockcopolymere mit linearen Strukturen, insbesondere solche mit der Blockfolge
S₁-(S/B)_{A}-S₂(Triblockcopolymere)
S₁-(S/B)_{A}-S₂-(S/B)_{B}-S₃ oder
S₁-(S/B)_{A}-S₂-(S/B)_{A}-S₃(Pentablockcopolymere),
wobei S₁ und S₂ jeweils für einen Block S stehen.

Diese zeichnen sich durch einen hohem E-Modul von1500 bis 2000 MPa, eine hohe Streckspannung im Bereich von 35 bis 42 MPa und einer Bruchdehnung von über 30% in Mischungen mit einem Polystyrolanteil von über 80 Gew.-%. Kommerzielle SBS-Blockcopolymere mit diesem Polystyrolanteil zeigen zum Vergleich eine Bruchdehnung von nur 3-30%.

Bevorzugt werden Triblockcopolymere der Struktur S₁-(S/B)_{A}-S₂, welche einen Block (S/B)_{A} aus 70 bis 75 Gew.-% Styroleinheiten und 25 bis 30 Gew.-% Butadieneinheiten enthalten. Die Glasübergangstemperaturen können mit DSC bestimmt oder nach der Gordon-Taylor-Gleichung berechnet werden und liegen bei dieser Zusammensetzung im Bereich von 1 bis 10°C. Der Gewichtsanteil der Blöcke S₁ und S₂, bezogen auf das Triblockcopolymer beträgt bevorzugt jeweils 30% bis 35 Gew.-%. Das Gesamtmolekulargewicht liegt vorzugsweise im Bereich von 150.000 bis 350.000 g/mol, besonders bevorzugt im Bereich von 200.000 bis 300.000 g/mol.

Besonders bevorzugt werden Pentablockcopolymere der Struktur S₁-(S/B)_{A}-S₂-(S/B)_{A}-S₃, welche einen Block (S/B)_{A} aus 70 bis 75 Gew.-% Styroleinheiten und 25 bis 30 Gew.-% Butadieneinheiten enthalten. Die Glasübergangstemperaturen können mit DSC bestimmt oder nach der Gordon-Taylor-Gleichung berechnet werden und liegen bei dieser Zusammensetzung im Bereich von 1 bis 10°C. Der Gewichtsanteil der Summe der Blöcke S₁ und S₂, bezogen auf das Pentablockcopolymer, beträgt bevorzugt 50 bis 67 Gew.-%. Das Gesamtmolekulargewicht liegt vorzugsweise im Bereich von 260.000 bis 350.000 g/mol. Bedingt durch die molekulare Architektur können hier Bruchdehnungen von bis zu 300% bei einem Styrolanteil von über 85% erreicht werden.

Des Weiteren können die Blockcopolymeren A eine sternförmige Struktur aufweisen, welche die Blockfolge S₁(S/B)_{A}-S₂-X-S₂-(S/B)_{A}-S₁ enthält wobei S₁ und S₂ jeweils für einen Block S und X für den Rest eines mehrfunktionellen Kopplungsmittels stehen. Als Kopplungsmittel geeignet ist z.B. epoxidiertes Pflanzenöl wie epoxidiertes Leinsamen- oder Sojabohnenöl. Man erhält in diesem Fall Sterne mit 3 bis 5 Ästen. Vorzugsweise bestehen die sternförmigen Blockcopolymeren im Mittel aus zwei S₁-(S/B)_{A}-S₂-Armen und zwei über den Rest des Kopplungsmittels verknüpften S₃-Blöcken und enthalten überwiegend die Struktur S₁(S/B)_{A}-S₂-X(S₃)₂-S₂-(S/B)_{A}-S₁, wobei S₃ für einen weiteren S-Block steht. Das Molekulargewicht des Blockes S₃ sollte kleiner als das der Blöcke S₁ sein. Bevorzugt entspricht das Molekulargewicht des Blockes S₃ dem des Blockes S₂.

Solche sternförmigen Blockcopolymere können beispielsweise durch zweifache Initiierung erhalten werden, wobei eine Initiatormenge I₁ zusammen mit der für die Bildung der Blöcke S₁ benötigten vinylaromatischen Monomeren und eine Initiatormenge I₂ zusammen mit der für die Bildung der S₂-und S₃-Blöcke benötigen vinylaromatischen Monomeren nach Beendigung der Polymerisation des (S/B)_{A}-Blockes zugegeben werden. Das molare Verhältnis I₁/I₂ beträgt bevorzugt 0,5:1 bis 2:1, besonders bevorzugt 1,2:1 bis 1,8:1. Die sternförmigen Blockcopolymere weisen gegenüber den linearen Blockcopolymeren in der Regel eine breitere Molmassenverteilung auf. Diese führt bei konstanter Fließfähigkeit zu einer verbesserten Transparenz

Block - oder Pfropfcopolymere, welche aus den Blöcken S, (S/B)_{A} und (S/B)_{B} aufgebaut sind, beispielsweise Pentablockcopolymere der Struktur S₁-(S/B)_{A}-S2-(S/B)_{A}, bilden eine Co-kontinuierliche Morphologie aus. Hier sind drei verschiedene Phasen in einem Polymermolekül vereint. Die aus den (S/B)_{B}-Blöcken gebildete Weichphase vermittelt in der Formmasse die Schlagzähigkeit und eignet sich zum Abfangen von Rissbildungen (Crazes). Die aus den Blöcken (S/B)_{A} gebildete halbharte Phase ist für die hohe Duktilität und Reißdehnungen verantwortlich. Über den Anteil der aus den Blöcken S und gegebenenfalls zugemischtem Polystyrol gebildeten Hartphase kann der E-Modul und die Streckspannung eingestellt werden.

Die erfindungsgemäßen verwendeten Block- oder Pfropfcopolymeren bilden in der Regel mit Standardpolystyrol nanodisperse, mehrphasige hochtransparente Mischungen aus.

Die expandierbaren, thermoplastischen Polymerpartikel enthalten als Komponente C2) 0,1 bis 9,9 Gewichtsprozent, insbesondere 1 bis 5 Gew.-% eines von C1 verschiedenen Styrol-Butadien- oder Styrol-Isopren-Blockcopolymeren.

Hierfür eignen sich beispielsweise Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Geeignete Styrol-Butadien-Blockcopolymere, welche aus mindestens zwei Polystyrolblöcken S und mindestens einem Styrol-Butadien-Copolymer-Block S/B bestehen, sind beispielsweise sternförmig verzweigte Blockcopolymere, wie sie in EP-A 0654488 beschrieben sind.

Des Weiteren eignen sich Blockcopolymere mit mindestens zwei Hartblöcken S₁ und S₂ aus vinylaromatischen Monomeren mit mindestens einem dazwischen liegenden statistischen Weichblock B/S aus vinylaromatischen Monomeren und Dien, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Als Verträglichkeitsvermittler sind auch lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. geeignet. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 bis 16 %.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche hydriert oder nicht hydriert sein können, verwendet. Diese sind beispielsweise unter der Bezeichnung Styroflex® 2G66, Styrolux® 3G55, Styroclear® GH62, Kraton® D 1101, Kraton® D 1155, Tuftec® H1043 oder Europren® SOL T6414 im Handel. Dabei handelt es sich um SBS-Blockcopolymere mit scharfen Übergängen zwischen B- und S-Blöcken.

Als Komponente C3) enthalten die expandierbaren, thermoplastischen Polymerpartikel 0,1 bis 9,9 Gewichtsprozent, insbesondere 1 bis 5 Gew.-% eines Styrol-Ethylen-Butylen-Blockcopolymeren (SEBS). Geeignete Styrol-Ethylen-Butylen-Blockcopolymere (SEBS) sind beispielsweise solche, die durch Hydrierung der olefinischen Doppelbindungen der Blockcopolymeren C1) erhältlich sind. Geeignete Styrol-Ethylen-Butylen-Blockcopolymere sind beispielsweise die im Handel erhältlichen Kraton® G Typen, insbesondere Kraton® G 1650.

Des Weiteren können der mehrphasigen Polymermischung Additive, Keimbildner, Weichmacher, Flammschutzmittel, lösliche und unlösliche anorganische und/oder organische Farbstoffe und Pigmente, Füllstoffe oder Cotreibmittel in Mengen zugesetzt werden, die die Domänenbildung und daraus resultierende Schaumstoffstruktur nicht beeinträchtigen.

Als Komponente E) enthalten die expandierbaren, thermoplastischen Polymerpartikel 0 bis 5 Gewichtsprozent, bevorzugt 0,3 bis 3 Gewichtsprozent eines Keimbildner oder Nukleierungsmittel, beispielsweise Talkum.

Als Treibmittel (Komponente D) enthalten die expandierbaren, thermoplastischen Polymerpartikel 1 bis 15 Gewichtsprozent, bevorzugt 3 bis 10 Gewichtsprozent, bezogen auf die Komponenten A) bis E), eines physikalischen Treibmittels, wie aliphatische C₃-bis C₈-Kohlenwasserstoffe, Alkoholen, Ketonen, Ethern oder halogenierten Kohlenwasserstoffen eingesetzt. Bevorzugt wird iso-Butan, n-Butan, iso-Pentan, n-Pentan.

Geeignete Cotreibmittel sind solche mit einer geringeren Selektivität der Löslichkeit für die Domänen bildenden Phase, beispielsweise Gase wie CO₂, N₂, Fluorkohlenwasserstoffe oder Edelgase. Diese werden bevorzugt in Mengen von 0 bis 10 Gew.-%, bezogen auf die expandierbaren, thermoplastischen Polymerpartikel eingesetzt.

Die Polymermischung mit einer kontinuierlichen und einer dispersen Phase kann durch Mischen von zwei unverträglichen thermoplastischen Polymeren, beispielsweise in einem Extruder, hergestellt werden.

Die erfindungsgemäßen expandierbaren thermoplastischen Polymerpartikel können durch ein Verfahren erhalten werden, bei dem man
a) eine Polymermischungen mit einer kontinuierlichen und einer dispersen Phase durch Mischen der Komponenten A) bis C) und gegebenenfalls E) herstellt,
b) diese Mischungen mit einem Treibmittel D) imprägniert und zu expandierbaren thermoplastischen Polymerpartikel granuliert,
c) und zu expandierbaren, thermoplastischen Polymerpartikel durch Unterwassergranulierung bei einem Druck im Bereich von 1,5 bis 10 bar granuliert.

Der mittlere Durchmesser der dispersen Phase der in Stufe a) hergestellten Polymermischung liegt bevorzugt im Bereich von 1 bis 2000 nm, besonders bevorzugt im Bereich von 100 bis 1500 nm.

In einer weiteren Ausführungsform kann in Stufe b) die Polymermischung auch zuerst granuliert und die Granulate anschließend in wässriger Phase unter Druck und erhöhter Temperatur mit einem Treibmittel D) zu expandierbaren thermoplastischen Polymerpartikel nachimprägniert werden. Diese können anschließend nach Abkühlen unter die Schmelzetemperatur der Polymermatrix isoliert oder als vorgeschäumten Schaumstoffpartikeln direkt durch Druckentspannung erhalten werden.

Besonders bevorzugt wird ein kontinuierliches Verfahren, bei dem die Stufe a) ein thermoplastisches, die kontinuierliche Phase bildenden Styrolpolymer A), beispielsweise Polystyrol, in einem Zweiwellen-Extruder aufgeschmolzen und zur Bildung der Polymermischung mit einem die disperse Phase bildenden Polyolefin B1 und B2) sowie den Verträglichkeitsvermittlern C1) und C2) und gegebenenfalls Nukleierungsmittel E) vermischt wird und anschließend die Polymerschmelze in Stufe b) durch eine oder mehrere statische und/oder dynamischen Mischelemente gefördert und mit dem Treibmittel D) imprägniert wird. Die treibmittelbeladene Schmelze kann anschließend durch eine entsprechende Düse zu Schaumstoffplatten, -strängen oder -Partikeln extrudiert und geschnitten werden.

Mittels Unterwassergranulierung (UWG) kann die aus der Düse austretende Schmelze auch direkt zu expandierbaren oder gezielt angeschäumten Polymerpartikeln geschnitten werden. Die Einstellung des geeigneten Gegendrucks und einer geeigneten Temperatur im Wasserbad des UWG ermöglicht somit eine gezielte Herstellung von Schaumstoffpartikeln zu ermöglichen.

Zur Herstellung der expandierbaren Polymerpartikel wird die Unterwassergranulierung in der Regel bei Drücken im Bereich von 1,5 bis 10 bar durchgeführt. Die Düsenplatte weist in der Regel mehrere Nester mit mehreren Löchern. Bei einem Lochdurchmesser im Bereich von 0,2 bis 1 mm erhält man expandierbare Polymerpartikel mit der bevorzugten mittleren Partikeldurchmesser im Bereich von 0,5 bis 1,5 mm.0,8 mm. Expandierbare Polymerpartikel mit enger Partikelgrößenverteilung und einem mittleren Partikeldurchmesser im Bereich von 0,6 bis 0,8 mm führen zu einer besseren Ausfüllung des Formteilautomaten mit filigranere Formteilgestaltung. Des Weiteren wird dadurch eine bessere Formteiloberfläche erreicht mit weniger Zwickelvolumen.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Eine bevorzugte Polymermischungen in Stufe a) wird durch Mischen von
A) 45 bis 98,8 Gewichtsprozent, insbesondere 55 bis 89 Gew.-% Styrolpolymeren,
B1) 1 bis 45 Gewichtsprozent, insbesondere 4 bis 25 Gew.-% Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 9,9 Gewichtsprozent eines Styrol-Butadien- oder Styrol-Isopren-Blockcopolymeren,
C2) 0,1 bis 9,9 Gewichtsprozent eines Styrol-Ethylen-Butylen-Blockcopolymeren,
E) 0 bis 5 Gewichtsprozent eines Nukleierungsmittels,
erhalten und

in Stufe c) mit 1 bis 15 Gew.-% eines Treibmittels D) imprägniert, wobei die Summe aus A) bis E) 100 Gew.-% ergibt,

Zur Verbesserung der Verarbeitbarkeit können die fertigen expandierbaren thermoplastischen Polymerpartikel durch Glycerinester, Antistatika oder Antiverklebungsmittel beschichtet werden.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die erfindungsgemäßen expandierbaren, thermoplastischen Polymerpartikel können mittels Heißluft oder Wasserdampf zu Schaumpartikeln mit einer Dichte im Bereich von 8 bis 200 kg/m³, bevorzugt im Bereich von 10 bis 50 kg/m³ vorgeschäumt und anschließend in einer geschlossenen Form zu Schaumstoffformkörpern verschweißt werden. Hierbei wird der Verarbeitungsdruck so niedrig gewählt wird, dass Domänenstruktur in den Zellmembranen erhalten bleibt, zu Partikelschaumstoffformteilen verschweißt. Üblicherweise liegt der Druck im Bereich von 0,5 dies 1,0 bar.

Die so erhältlichen thermoplastischen Partikelschaumstoffe weisen bevorzugt Zellen einer mittleren Zellgröße im Bereich von 50 bis 250 µm und eine faserförmig verstreckte, disperse Phase in den Zellwänden der thermoplastischen Partikelschaumstoffe mit einem mittleren Durchmesser im Bereich von 10 bis 1000 nm, besonders bevorzugt im Bereich von 100 bis 750 nm auf.

### Beispiele

### Einsatzstoffe:

Komponente A: Polystyrol 158K der BASF SE
Komponente B:
   B1: Polyethylen PE-LLD (726 N, Exxon Mobile, Dichte 0,925 g/L, MVI = 0,7 g/10 min, Schmelzpunkt 123°C)
   B2: Polyethylen Ethylen-Octen-Copolymer (Engage® 8411 der Dow, Dichte 0,880 g/L, MVI = 18 g/10 min, Schmelzpunkt 72°C)
Komponente C:
   C1-1: Styrol-Butadien-Blockcopolymer der Struktur S₁-(S/B)_{A}-S₂-(S/B)_{A}-S₁, (20-20-20-20-20 Gew.-%), gewichtsmittleres Molekulargewicht 300.000 g/mol
   C2: Kraton® G 1650, Styrol-Ethylen-Butylen-Blockcopolymer der Kraton Polymers LLC
   C3: Styrolux® 3G55, Styrol-Butadien-Blockcopolymer der BASF SE,
Komponente D: Treibmittel: Pentan S (20% iso-Pentan, 80% n-Pentan)
Komponente E: Talkum (HP 320, Omyacarb)

### Herstellung des Blockcopolymere C1-1

Zur Herstellung des linearen Styrol-Butadien-Blockcopolymeren C1-1wurden in einem doppelwandigen 10 Liter Edelstahl-Rührautoklaven mit einem Kreuzbalkenrührer 5385 ml Cyclohexan vorgelegt, bei 60°C mit 1,6 ml sec-Butyllithium (BuLi) bis zum Auftreten einer durch 1,1-Diphenylethylen als Indikator hervorgerufenen Gelbfärbung austitriert und anschließend mit 3,33 ml einer 1,4 M sec.-Butyl-Lithium-Lösung zur Initlierung und 0,55 ml einer 0,282 M Kalium-tert.-Amylat (KTA)-Lösung als Randomizer versetzt. Anschließend wurde die zur Herstellung des ersten S-Blockes benötigte Menge Styrol (280 g Styrol 1) zugegeben und auspolymerisiert. Die weiteren Blöcke wurden entsprechend der angegebenen Struktur und Zusammensetzung durch sequentielle Zugabe der entsprechenden Mengen Styrol bzw. Styrol und Butadien und jeweiligen vollständigen Umsatz angefügt. Zur Herstellung der Copolymerblöcke wurden Styrol und Butadien gleichzeitig in mehreren Portionen zugegeben und die Maximaltemperatur durch Gegenkühlen auf 77°C begrenzt. Für Blockcopolymer K1-3 wurden hierfür 84 g Butadien 1 und 196 g Styrol 2 für den Block (S/B)_{A}, 280 g Styrol 3 für den Block S₂, 84 g Butadien B2 und 196 g Styrol 4 für den Block (S/B)_{A} und 280 g Styrol 5 für den Block S₁

Danach wurden die lebenden Polymerketten durch Zugabe von 0,83 ml Isopropanol terminiert, mit 1,0% CO₂/0,5% Wasser, bezogen auf Feststoff angesäuert und eine Stabilisatorlösung (0,2% Sumilizer GS und 0,2% Irganox 1010, jeweils bezogen auf Feststoff) zugegeben. Das Cyclohexan wurde im Vakuumtrockenschrank abgedampft.

Das gewichtsmittlere Molekulargewicht M_{w} für die Blockcopolymeren K1-1 bis K1-7 beträgt jeweils 300.000 g/mol.

### Vergleichsversuch V1:

In einem Zweischneckenextruder der Firma Leitritz ZSK 18 wurden 84 Anteile Polystyrol 158K, 8 Anteile Polyethylen 726N, 5 Anteile Polyethylen Engage 8411 und 1,75 Anteile Kraton G1650 bei 220-240°C / 180-190 bar aufgeschmolzen. Anschließend wurden in die Polymerschmelze 7,5 Anteile S Pentan (20% iso-Pentan, 80% n-Pentan) als Treibmittel gedrückt und über zwei statische Mischer homogen in die Polymerschmelze eingearbeitet. Danach wurde über einen Kühler die Temperatur auf 180°-185°C reduziert. Zu dem treibmittelbeladenen Hauptschmelzestrom wurde über einen Seitenextruder 1 Anteil Talkum, in Form eines Batches als Nukleierungsmittel zudosiert (siehe Tabelle 1). Nach Homogenisierung über zwei weitere statische Mischer, wurde die Schmelze auf 155°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,1 mm) erhalten wurde.

### Beispiele 1 bis 4:

In einem Zweischneckenextruder der Firma Leitritz ZSK 18 wurden die Komponenten A, B, C, D und E bei 220-240°C / 130 bar aufgeschmolzen (siehe Tabelle 1). Anschließend wurde in die Polymerschmelze 7,5 Anteile Pentan S (20% iso-Pentan, 80% n-Pentan) als Treibmittel gedrückt und über zwei statische Mischer homogen in die Polymerschmelze eingearbeitet. Danach wurde über einen Kühler die Temperatur auf 180°-185°C reduziert. Zu dem treibmittelbeladenen Hauptschmelzestrom wurde über einen Seitenextruder 1 Anteil Talkum in Form eines Batches als Nukleierungsmittel zudosiert. Nach Homogenisierung über zwei weitere statische Mischer, wurde die Schmelze auf 140°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,1 mm) erhalten wurde.

### Beispiele 5 bis 7:

In einem Zweischneckenextruder der Firma Leitritz ZSK 18 wurden die Komponenten A, B, C, D, E bei 220-240°C / 130 bar aufgeschmolzen (siehe Tabelle 1). Anschließend wurde in die Polymerschmelze 7,5 Anteile Pentan S (20% iso-Pentan, 80% n-Pentan) als Treibmittel gedrückt und über zwei statische Mischer homogen in die Polymerschmelze eingearbeitet. Danach wurde über einen Kühler die Temperatur auf 180°-185°C reduziert. Zu dem treibmittelbeladenen Hauptschmelzestrom wurde über einen Seitenextruder 1 Anteil Talkum in Form eines Batches als Nukleierungsmittel zudosiert. Nach Homogenisierung über zwei weitere statische Mischer, wurde die Schmelze auf 140°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,1 mm) erhalten wurde.

### Beispiel 8:

In einem Zweischneckenextruder der Firma Leitritz ZSK 18 wurden 73 Anteile Polystyrol 168N, 8 Anteile Polyethylen 726N, 5 Anteile Polyethylen Engage 8411, 1,75 Anteile Kraton G1650 und 11,5 Anteile Komponente C1-1 bei 220-240°C / 200-210 bar aufgeschmolzen. Anschließend wurden in die Polymerschmelze 7,5 Anteile S Pentan (20% iso-Pentan, 80% n-Pentan) als Treibmittel gedrückt und über zwei statische Mischer homogen in die Polymerschmelze eingearbeitet. Danach wurde über einen Kühler die Temperatur auf 190°-195°C reduziert. Zu dem treibmittelbeladenen Hauptschmelzestrom wurde über einen Seitenextruder 1 Anteil Talkum, in Form eines Batches als Nukleierungsmittel zudosiert (siehe Tabelle 1). Nach Homogenisierung über zwei weitere statische Mischer, wurde die Schmelze auf 155°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,1 mm) erhalten wurde.

### Beispiel 9:

In einem Zweischneckenextruder der Firma Leitritz ZSK 18 wurden 61 Anteile Polystyrol 168N, 8 Anteile Polyethylen 726N, 5 Anteile Polyethylen Engage 8411, 1,75 Anteile Kraton G1650, 12,5 Anteile Komponente C1-1 und 10,5 Anteile Styrolux 3G55 bei 220-240°C / 200-210 bar aufgeschmolzen. Anschließend wurden in die Polymerschmelze 7,5 Anteile S Pentan (20% iso-Pentan, 80% n-Pentan) als Treibmittel gedrückt und über zwei statische Mischer homogen in die Polymerschmelze eingearbeitet. Danach wurde über einen Kühler die Temperatur auf 190°-195°C reduziert. Zu dem treibmittelbeladenen Hauptschmelzestrom wurde über einen Seitenextruder 1 Anteil Talkum, in Form eines Batches als Nukleierungsmittel zudosiert (siehe Tabelle 1). Nach Homogenisierung über zwei weitere statische Mischer, wurde die Schmelze auf 155°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,1 mm) erhalten wurde.

Das treibmittelhaltige Granulat wurde in einem EPS-Vorschäumer zu Schaumperlen geringer Dichte (15-25 g/L vorgeschäumt) und in einem EPS-Formteilautomaten bei einem Überdruck von 0,7 - 1,1 bar zu Formteilen verarbeitet.

An den Formteilen wurden verschiedene mechanische Messungen durchgeführt um die Elastifizierung des Schaumstoffs nachzuweisen. Tabelle 3 zeigt den Verformungsrest εᵣₑₛₜ der Schaumstoffformteile, ermittelt aus der Einfachhysterese bei 75% Stauchung (Vorschub 5mm/min) nach ISO 3386-1. Der Verformungsrest εᵣₑₛₜ ist der prozentuale Anteil nach 75% Stauchung, der zur Ursprungshöhe des gestauchten Körpers fehlt. Bei den erfindungsgemäßen Beispielen wird im Vergleich zum reinen EPS eine deutliche Elastifizierung beobachtet, die an dem sehr hohen Rückstellungsvermögen erkennbar ist.

Zusätzlich wurden die Druckfestigkeit bei 10% Stauchung nach DIN-EN 826 und die Biegefestigkeit nach DIN-EN 12089 bestimmt. Bei den Messungen zur Biegefestigkeit wurde zusätzlich die Biegearbeit bestimmt.

Als Beschichtungskomponenten wurde 70 Gew.-% Glycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil. Die Biegefestigkeit wurde auf 250 bzw. 310 kPa gegenüber 150 kPa der aus den unbeschichteten Granulaten erhaltenen Formteile erhöht.

Die kleinen Partikelgrößen 0,8 mm zeigten eine Verbesserung bei der Verarbeitbarkeit zum Formteil bezüglich Entformzeiten und Füllverhalten des Werkzeugs. Zusätzlich wurde die Formteiloberfläche homogener als bei Partikeln mit 1,1 mm Durchmesser.

Tabelle 1: Zusammensetzung der expandierbaren Polymerpartikel (EPS) in Gewichtsanteilen und Eigenschaften der Schaumstoffformteile

**Tabelle 1**

| | Beispiele | V1 | 1 | 2 | 3 | 4 | 5 | 6 | 7 | 8 | 9 |
|---|---|---|---|---|---|---|---|---|---|---|---|
| Zusammensetzung | | | | | | | | | | | |
| | Komp. A GPPS Typ | 158K | 158K | 158K | 158K | 158K | 158K | 158K | 158K | 168N | 168N |
| | Komp. A [Gew.-%] | 84 | 78 | 73 | 65 | 61 | 73 | 61 | 50 | 73 | 61 |
| | Komp. B1 [Gew.-%] | 8 | 8 | 8 | 8 | 8 | 8 | 8 | 8 | 8 | 8 |
| | Komp. B2 [Gew.-%] | 5 | 5 | 5 | 5 | 5 | 5 | 5 | 5 | 5 | 5 |
| | Komp. C1 [Gew.-%] | | 6,25 | 11,50 | 18,75 | 22,75 | 6,25 | 12,5 | 18,75 | 11,5 | 12,5 |
| | Komp. C2 [Gew.-%] | | | | | | 5,25 | 10,5 | 15,75 | | 10,5 |
| | Komp. C3 [Gew.-%] | 1,75 | 1,75 | 1,75 | 1,75 | 1,75 | 1,75 | 1,75 | 1,75 | 1,75 | 1,75 |
| | Komp. D [Gew.-%] | 7,5 | 7,5 | 7,5 | 7,5 | 7,5 | 7,5 | 7,5 | 7,5 | 7,5 | 7,5 |
| | Komp. E [Gew.-%] | 1 | 1 | 1 | 1 | 1 | 1 | 1 | 1 | 1 | 1 |

| Schaumstoffeigenschaften | | | | | | | | | | | |
|---|---|---|---|---|---|---|---|---|---|---|---|
| | Schaumstoffdichte [g/L] | 22,0 | 21,8 | 22,6 | 23,5 | 26,6 | 22,8 | 22,5 | 33,0 | 23,8 | 25,5 |
| | Druckfestigkeit bei 10% [kPa] | 103 | 103 | 100 | 110 | 106 | 112 | 109 | 116 | 130 | 116 |
| | Biegefestigkeit [kPa] | 301 | 287 | 293 | 308 | 313 | 299 | 301 | 330 | 322 | 330 |
| | Biegearbeit [Nm] | 4,6 | 5,1 | 5,5 | 6,0 | 6,7 | 5,6 | 5,8 | 7,4 | 6,0 | 7,4 |
| | Entformungsrest [%] | 32 | 30 | 33 | 31 | 32 | 28 | 28 | 32 | 29 | 32 |

## Patentansprüche

1. Expandierbare, thermoplastische Polymerpartikel, enthaltend
A) 45 bis 97,8 Gewichtsprozent eines Styrolpolymeren,
B1) 1 bis 45 Gewichtsprozent eines Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 25 Gewichtsprozent eines Block- oder Pfropfcopolymer mit einem gewichtsmittleren Molekulargewicht M_{w} von mindestens 100.000 g/mol, enthaltend
a) mindestens einen Block S aus 95 bis 100 Gew.-% vinylaromatischen Monomeren und 0 bis 5 Gew.-% Dienen und
b) mindestens einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C, wobei
der Gewichtsanteil der Summe aller Blöcke S im Bereich von 50 bis 70 Gew.-%, bezogen auf das Block- oder Pfropfcopolymer A, liegt,
C2) 0 bis 20 Gewichtsprozent eines von C1 verschiedenen Styrol-Butadien- oder Styrol-Isopren-Blockcopolymeren,
C3) 0,1 bis 9,9 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels
wobei die Summe aus A) bis E) 100 Gew.-% ergibt

2. Expandierbare, thermoplastische Polymerpartikel nach Anspruch 1, **dadurch gekennzeichnet, dass** sie
A) 55 bis 89,7 Gewichtsprozent eines Styrolpolymeren,
B1) 4 bis 25 Gewichtsprozent eines Polyolefins mit einem Schmelzpunkt im Bereich von 105 bis 140°C,
B2) 1 bis 15 Gewichtsprozent eines Polyolefins mit einem Schmelzpunkt unter 105°C,
C1) 3 bis 25 Gewichtsprozent des Block- oder Pfropfcopolymeren,
C2) 3 bis 20 Gewichtsprozent eines von C1 verschiedenen Styrol-Butadien- oder Styrol-Isopren-Blockcopolymeren,
C3) 1 bis 5 Gewichtsprozent eines Styrol-Ethylen-Butylen-Blockcopolymeren,
D) 3 bis 10 Gewichtsprozent eines Treibmittels,
E) 0,3 bis 3 Gewichtsprozent eines Nukleierungsmittels
enthaltend, wobei die Summe aus A) bis E) 100 Gew.-% ergibt.

3. Expandierbare, thermoplastische Polymerpartikel nach Anspruch 1 oder 2, **dadurch gekennzeichnet, dass** sie als Styrolpolymer A) Standard-Polystyrol (GPPS) enthalten.

4. Expandierbare, thermoplastische Polymerpartikel nach einem der Ansprüche 1 bis 3, **dadurch gekennzeichnet, dass** sie als Polyolefin B1) Polyethylen enthalten.

5. Expandierbare, thermoplastische Polymerpartikel nach einem der Ansprüche 1 bis 4, **dadurch gekennzeichnet, dass** sie als Polyolefin B2) ein Copolymer aus Ethylen und Octen enthalten.

6. Expandierbare, thermoplastische Polymerpartikel nach einem der Ansprüche 1 bis 5, **dadurch gekennzeichnet, dass** das Block- oder Pfropfcopolymere C1 eine lineare Struktur mit der Blockfolge S₁-(S/B)_{A}-S₂-(S/B)_{A}-S₃ aufweist, wobei S₁, S₂ und S₃ jeweils für einen Block S stehen.

7. Expandierbare, thermoplastische Polymerpartikel nach einem der Ansprüche 1 bis 6, **dadurch gekennzeichnet, dass** die Summe von C1, C2 und C3 im Bereich von 3,5 bis 40 Gewichtsprozent liegt.

8. Expandierbare, thermoplastische Polymerpartikel nach einem der Ansprüche 1 bis 5, **dadurch gekennzeichnet, dass** der mittlere Durchmesser der dispersen Phase der Polymermischung im Bereich von 1 bis 1500 nm liegt.

9. Expandierbare, thermoplastische Polymerpartikel nach einem der Ansprüche 1 bis 6, **dadurch gekennzeichnet, dass** sie eine Beschichtung, enthaltend ein Glycerinstearat, aufweisen.

10. Verfahren zur Herstellung von expandierbaren, thermoplastischen Polymerpartikeln nach einem der Ansprüche 1 bis 6, **dadurch gekennzeichnet, dass** man
a) eine Polymerschmelze mit einer kontinuierlichen und einer dispersen Phase durch Mischen der Komponenten A) bis C) und gegebenenfalls E) herstellt,
b) diese Polymerschmelze mit einem Treibmittel D) imprägniert,
c) und zu expandierbaren thermoplastischen Polymerpartikel durch Unterwassergranulierung bei einem Druck von 1,5 bis 10 bar granuliert.

11. Verfahren zur Herstellung von expandierbaren, thermoplastischen Polymerpartikeln nach einem der Ansprüche 1 bis 6, **dadurch gekennzeichnete**n, dass man
a) eine Polymerschmelze mit einer kontinuierlichen und einer dispersen Phase durch Mischen der Komponenten A) bis C) und gegebenenfalls E) hergestellt,
b) diese Polymerschmelze granuliert und in wässriger Phase unter Druck und erhöhter Temperatur mit einem Treibmittel D)zu expandierbaren thermoplastischen Polymerpartikel nachimprägniert.

12. Verfahren nach einem der Ansprüche 10 bis 11, **dadurch gekennzeichnet, dass** in Stufe b) 1 bis 10 Gewichtsprozent, bezogen auf die Polymermischung, eines C₃ bis C₈-Kohlenwasserstoffes als Treibmittel eingesetzt wird.

## Claims

1. An expandable, thermoplastic polymer bead material, comprising
A) from 45 to 97.8 percent by weight of a styrene polymer,
B1) from 1 to 45 percent by weight of a Polyolefin with a melting point in the range from 105 to 140°C,
B2) from 0 to 25 percent by weight of a Polyolefin with a melting point below 105°C,
C1) from 0.1 to 25 percent by weight of a block or graft copolymer with weight-average molar mass M_{w} of at least 100,000 g/mol, comprising
a) at least one block S composed of from 95 to 100% by weight of vinylaromatic monomers and from 0 to 5% by weight of dienes, and
b) at least once copolymer block (S/B)_{A} composed of from 63 to 80% by weight of vinylaromatic monomers and from 20 to 37% by weight of dienes, with glass transition temperature Tg_{A} in the range from 5 to 30°C, where
the proportion by weight of the entirety of all of the blocks S is in the range from 50 to 70% by weight, based on the block or graft copolymer A,
C2) from 0 to 20 percent by weight of a styrenebutadiene or styrene-isoprene block copolymer different from C1,
C3) from 0.1 to 9.9 percent by weight of a styrene-ethylene-butylene block copolymer,
D) from 1 to 15 percent by weight of a blowing agent, and
E) from 0 to 5 percent by weight of a nucleating agent,
where the entirety composed of A) to E) gives 100% by weight.

2. The expandable, thermoplastic Polymer bead material according to claim 1, which comprises
A) from 55 to 89.7 percent by weight of a styrene polymer,
B1) from 4 to 25 percent by weight of a Polyolefin with a melting point in the range from 105 to 140°C,
B2) from 1 to 15 percent by weight of a Polyolefin with a melting point below 105°C,
C1) from 3 to 25 percent by weight of the block or graft copolymer,
C2) from 3 to 20 percent by weight of a styrenebutadiene or styrene-isoprene block copolymer different from C1,
C3) from 1 to 5 percent by weight of a styrene-ethylene-butylene block copolymer,
D) from 3 to 10 percent by weight of a blowing agent, and
E) from 0.3 to 3 percent by weight of a nucleating agent,
where the entirely composed of A) to E) gives 100% by weight.

3. The expandable, thermoplastic polymer bead material according to claim 1 or 2, which comprises, as styrene polymer A), standard polystyrene (GPPS).

4. The expandable, thermoplastic polymer bead material according to any of claims 1 to 3, which comprises, as polyolefin B1), polyethylene.

5. The expandable, thermoplastic polymer bead material according to any of claims 1 to 4, which comprises, as polyolefin B2), a copolymer composed of ethylene and octene.

6. The expandable, thermoplastic polymer bead material according to any of claims 1 to 5, wherein the block or graft copolymer C1 has a linear structure having the block sequence S₁-(S/B)_{A}-S₂-(S/B)_{A}-S₃, where each of S₁, S₂ and S₃ is a block S.

7. The expandable, thermoplastic polymer bead material according to any of claims 1 to 6, wherein the entirety of C1, C2, and C3 is in the range from 3.5 to 40 percent by weight.

8. The expandable, thermoplastic polymer bead material according to any of claims 1 to 5, wherein the average diameter of the disperse phase of the polymer mixture is in the range from 1 to 1500 nm.

9. The expandable, thermoplastic polymer bead material according to any of claims 1 to 6, which has a coating, comprising a glycerol stearate.

10. A process for the production of expandable, thermoplastic polymer bead material according to any of claims 1 to 6, which comprises
a) producing a polymer melt with a continuous and a disperse phase via mixing of components A) to C) and optionally E),
b) impregnating this polymer melt with a blowing agent D), and
c) pelletizing via underwater pelletization at a pressure of from 1.5 to 10 bar, to give expandable thermoplastic polymer bead material.

11. A process for the production of expandable, thermoplastic polymer bead material according to any of claims 1 to 6, which comprises
a) producing a polymer melt with a continuous and a disperse phase via mixing of components A) to C) and optionally E),
b) pelletizing this polymer melt and post-impregnating it in an aqueous phase under pressure and at an elevated temperature with a blowing agent D) to give expandable thermoplastic polymer bead material.

12. The process according to any of claims 10 to 11, wherein, in stage b), the amount used of a C₃ - C₈ hydrocarbon as blowing agent is from 1 to 10 percent by weight, based on the polymer mixture.

## Revendications

1. Particules polymères expansibles, thermoplastiques, contenant
A) 45 à 97,8% en poids d'un polymère du styrène,
B1) 1 à 45% en poids d'une polyoléfine présentant un point de fusion dans la plage de 105 à 140°C,
B2) 0 à 25% en poids d'une polyoléfine présentant un point de fusion inférieur à 105°C,
C1) 0,1 à 25% en poids d'un copolymère à blocs ou greffé présentant un poids moléculaire pondéral
moyen M_{w} d'au moins 100 000 g/mole, contenant en a) au moins un bloc S constitué par 95 à 100% en poids de monomères aromatiques de vinyle et 0 à 5% en poids de diènes et
b) au moins un bloc copolymère (S/B)_{A} constitué par 63 à 80% en poids de monomères aromatiques de vinyle et 20 à 37% en poids de diènes présentant une température de transition vitreuse Tg_{A} dans la plage de 5 à 30°C,
la proportion pondérale de la somme de tous les blocs S se situant dans la plage de 50 à 70% en poids, par rapport au copolymère à blocs ou greffé A,
C2) 0 à 20% en poids d'un copolymère à blocs de styrène-butadiène ou de styrène-isoprène différent de C1,
C3) 0,1 à 9,9% en poids d'un copolymère à blocs de styrène-éthylène-butylène,
D) 1 à 15% en poids d'un argent gonflant,
E) 0 à 5% en poids d'un agent de nucléation,
la somme de A) à E) valant 100% en poids.

2. Particules polymères expansibles, thermoplastiques, selon la revendication 1, **caractérisées en ce qu'**elles contiennent
A) 55 à 89,7% en poids d'un polymère du styrène,
B1) 4 à 25% en poids d'une polyoléfine présentant un point de fusion dans la plage de 105 à 140°C,
B2) 1 à 15% en poids d'une polyoléfine présentant un point de fusion inférieur à 105°C,
C1) 3 à 25% en poids du copolymère à blocs ou greffé,
C2) 3 à 20% en poids d'un copolymère à blocs de styrène-butadiène ou de styrène-isoprène différent de C1,
C3) 1 à 5% en poids d'un copolymère à blocs de styrène-éthylène-butylène,
D) 3 à 10% en poids d'un agent gonflant,
E) 0,3 à 3% en poids d'un agent de nucléation,
la somme de A) à E) valant 100% en poids.

3. Particules polymères expansibles, thermoplastiques, selon la revendication 1 ou 2, **caractérisées en ce qu'**elles conviennent, comme polymère de styrène A), du polystyrène standard (GPPS).

4. Particules polymères expansibles, thermoplastiques, selon l'une quelconque des revendications 1 à 3, **caractérisées en ce qu'**elles contiennent, comme polyoléfine B1), du polyéthylène.

5. Particules polymères expansibles, thermoplastiques, selon l'une quelconque des revendications 1 à 4, **caractérisées en ce qu'**elles contiennent, comme polyoléfine B2), un copolymère d'éthylène et d'octène.

6. Particules polymères expansibles, thermoplastiques, selon l'une quelconque des revendications 1 à 5, **caractérisées en ce que** le copolymère à blocs ou greffé C1 présente une structure linéaire d'une succession de blocs S₁-(S/B)_{A}-S₂-(S/B)_{A}-S_{3,} S₁, S₂ et S₃ représentant à chaque fois un bloc S.

7. Particules polymères expansibles, thermoplastiques, selon l'une quelconque des revendications 1 à 6, **caractérisées en ce que** la somme de C1, C2 et C3 se situé dans la plage de 3,5 à 40% en poids.

8. Particules polymères expansibles, thermoplastiques, selon l'une quelconque des revendications 1 à 5, **caractérisées en ce que** le diamètre moyen de la phase dispersée du mélange de polymères se situe dans la plage de 1 à 1500 nm.

9. Particules polymères expansibles, thermoplastiques, selon l'une quelconque des revendications 1 à 6, **caractérisées en ce qu'**elles présentent un revêtement contenant un stéarate de glycérol.

10. Procédé pour la production de particules polymères expansibles, thermoplastiques, selon l'une quelconque des revendications 1 à 6, **caractérisé en ce qu'**on
a) préparé une masse fondue de polymère, présentant une phase continue et une phase dispersée par mélange des composants A) à C) et le cas échéant E),
b) imprègne cette masse fondue de polymère d'un agent gonflant D),
c) et granule en particules polymères thermoplastiques expansibles par granulation sous eau à une pression de 1,5 à 10 bars.

11. Procédé pour la production de particules polymères expansibles, thermoplastiques, selon l'une quelconque des revendications 1 à 6, **caractérisé en ce qu'**on
a) prépare une masse fondue de polymère, présentant une phase continue et une phase dispersée par mélange des composants A) à C) et le cas échéant E),
b) granule cette masse fondue de polymère et post-imprègne en phase aqueuse sous pression et à température augmentée par un agent gonflant D) en particules polymères expansibles, thermoplastiques.

12. Procédé selon l'une quelconque des revendications 10 à 11, **caractérisé en ce qu'**on utilise, dans l'étape b), 1 à 10% en poids, par rapport au mélange de polymères, d'un hydrocarbure en C3 à C8 comme agent gonflant.
